# FASCICULE DE BREVET EUROPEEN

(11) **EP 0 470 900 B1**
(45) Date de publication et mention de la délivrance du brevet: **27.04.1994**
(21) Numéro de dépôt: 91402184.5
(22) Date de dépôt: 05.08.1991
(51) Int. Cl.: F16H 57/05, B65G 45/08

(54) **Procédé et installation de lubrification de chaînes**
Verfahren und Vorrichtung zum Schmieren einer Kette
Method of and device for lubricating a chain

(30) Priorité: 09.08.1990 FR 9010207
(43) Date de publication de la demande: 12.02.1992
(73) Titulaire: CONSORTIUM DE RECHERCHES POUR L'APPLICATION DES FLUIDES, CRAF, F-49650 Brain sur Allonnes (FR)
(72) Inventeur: Javelly, Christian, F-49650 Allonnes (FR); Paris, René, F-49400 Saumur (FR)
(74) Mandataire: Casalonga, Axel

(56) Documents cités:
- DE-U- 7 826 547
- GB-A- 2 081 820
- GB-A- 2 104 978
- PATENT ABSTRACTS OF JAPAN vol. 7, no. 089 (M-210)26 Avril 1983 & JP-A-58 021 062 ( TOKYO SHIBAURA DENKI K.K. ) 7 Février 1983
- PATENT ABSTRACTS OF JAPAN vol. 10, no. 381 (M-547)19 Décembre 1986 & JP-A-61 171 995 ( TOSHIBA CORP. ) 2 Août 1986

## Description

La présente invention se rapporte à un procédé et à une installation de lubrification de chaîne à l'aide d'au moins un élément lubrificateur alimenté de façon cyclique en lubrifiant par une pompe, par l'intermédiaire d'un distributeur à dosage délivrant à chaque cycle une dose prédéterminée de lubrifiant sous pression, tels qu'ils sont connus par exemple du document DE-U-7826 547.

La lubrification cyclique par des distributeurs à dosage délivrant, à chaque cycle, une dose prédéterminée de lubrifiant sous pression est bien connue. Par la mise en route cyclique d'une pompe, du lubrifiant sous pression est envoyé de façon cyclique par une ligne d'alimentation simple à un distributeur qui peut être, soit à action directe, soit à action différée. Dans le premier cas, le distributeur envoie à l'élément lubrificateur, à chaque cycle, une dose prédéterminée de lubrifiant accumulée au cours du cycle précédent dans le distributeur, lequel se réarme à la fin du cycle, grâce à la décompression de la ligne d'alimentation. Dans le deuxième cas, le distributeur accumule une dose prédéterminée du lubrifiant pendant chaque cycle et n'envoie cette dose à l'élément lubrificateur qu'à la fin du cycle, lors de la décompression de la ligne d'alimentation.

Jusqu'à présent, les éléments lubrificateurs utilisés pour cette lubrification cyclique de chaînes comprennent un organe applicateur, par exemple un pinceau, en contact permanent avec la chaîne.

Or, ce contact permanent avec la chaîne provoque une usure prématurée de l'organe applicateur de l'élément lubrificateur, ce qui implique des arrêts de la chaîne et entraîne des frais de remplacement de l'organe applicateur. Or, ce contact permanent de l'organe applicateur avec la chaîne n'est absolument pas nécessaire. En effet, pour une lubrification correcte d'une chaîne, il suffit qu'à chaque cycle de lubrification (ou à chaque séquence comprenant plusieurs cycles successifs), chaque partie de la chaîne vienne une fois en contact avec l'organe applicateur d'un élément lubrificateur. Or, pendant le fonctionnement d'une chaîne, les cycles de lubrification peuvent être très espacés, de sorte que pendant la majeure partie du temps, les organes applicateurs des éléments lubrificateurs se trouvent inutilement en contact avec la chaîne.

La présente invention a pour objet un procédé et une installation de lubrification cyclique de chaînes remédiant aux inconvénients des procédés et installations connus et en particulier à l'usure des organes applicateurs des éléments lubrificateurs.

Le procédé conforme à l'invention de lubrification de chaînes consiste, de façon cyclique, à envoyer, par mise en route cyclique d'une pompe, du lubrifiant sous pression par une ligne d'alimentation simple à un distributeur à dosage délivrant à chaque cycle une dose prédéterminée de lubrifiant sous pression à un élément lubrificateur transmettant ce lubrifiant à la chaîne par contact de son organe applicateur avec cette dernière, et à décomprimer ensuite ladite ligne d'alimentation. Selon l'invention, on utilise un élément lubrificateur comprenant un organe applicateur mobile à l'encontre d'une force de rappel d'une position de repos dans laquelle il est en retrait par rapport à la chaîne à une position de travail dans laquelle il est en contact avec la chaîne. On commande le mouvement dudit organe applicateur de la position de repos à la position de travail par envoi de lubrifiant sous pression par ladite pompe à fonctionnement cyclique, par une ligne de commande contenant un clapet de retenue. On décomprime ladite ligne de commande, entre l'organe applicateur et ledit clapet, de façon temporisée par rapport à la décompression de la ligne d'alimentation, pour retarder le passage dudit organe à la position de repos sous l'action de ladite force de rappel.

L'installation conforme à l'invention de lubrification cyclique de chaînes comprend un groupe motopompe, des moyens pour mettre en route ledit groupe de façon cyclique, au moins un distributeur relié à la sortie de la pompe dudit groupe et délivrant, à chaque cycle de mise en route du groupe, un volume prédéterminé de lubrifiant, et au moins un élément lubrificateur alimenté par le distributeur et transmettant le lubrifiant à la chaîne par un organe applicateur en contact avec cette dernière. Selon l'invention, l'élément lubrificateur comprend un organe applicateur mobile entre une position de repos en retrait de la chaîne et une position de travail en contact avec la chaîne. L'installation comprend, en outre,des moyens élastiques pour solliciter l'organe applicateur vers ladite position de repos. L'installation comprend, de plus, des moyens de commande par fluide sous pression pour amener ledit organe, à l'encontre de l'action desdits moyens élastiques, à ladite position de travail lorsqu'ils sont alimentés en fluide sous pression. L'installation comprend également une ligne de commande allant de la sortie de la pompe dudit groupe auxdits moyens de commande et contenant un clapet de retenue permettant le passage du lubrifiant sous pression de la pompe vers les moyens de commande. Enfin, l'installation comprend une ligne de décompression contenant une vanne de décharge qui, lorsqu'elle est ouverte, relie ladite ligne de commande, entre ledit clapet et lesdits moyens de commande, au réservoir de la pompe dudit groupe, et des moyens de temporisation pour commander l'ouverture de ladite vanne avec un retard prédéterminé par rapport à la fin du cycle de fonctionnement dudit groupe motopompe.

D'autres caractéristiques et avantages de l'invention apparaîtront dans la description ci-après d'un exemple de réalisation non limitatif d'une installation conforme à l'invention, illustré par les dessins annexés, sur lesquels :
***la figure 1*** est un schéma d'une installation conforme à l'invention de lubrification cyclique d'une chaîne ;
***la figure 2*** est une vue en perspective, avec arrachement partiel, d'un élément lubrificateur utilisé sur l'installation suivant la figure 1 ;
***les figures 3 et 4*** sont des vues suivant les flèches III et IV de la figure 2.

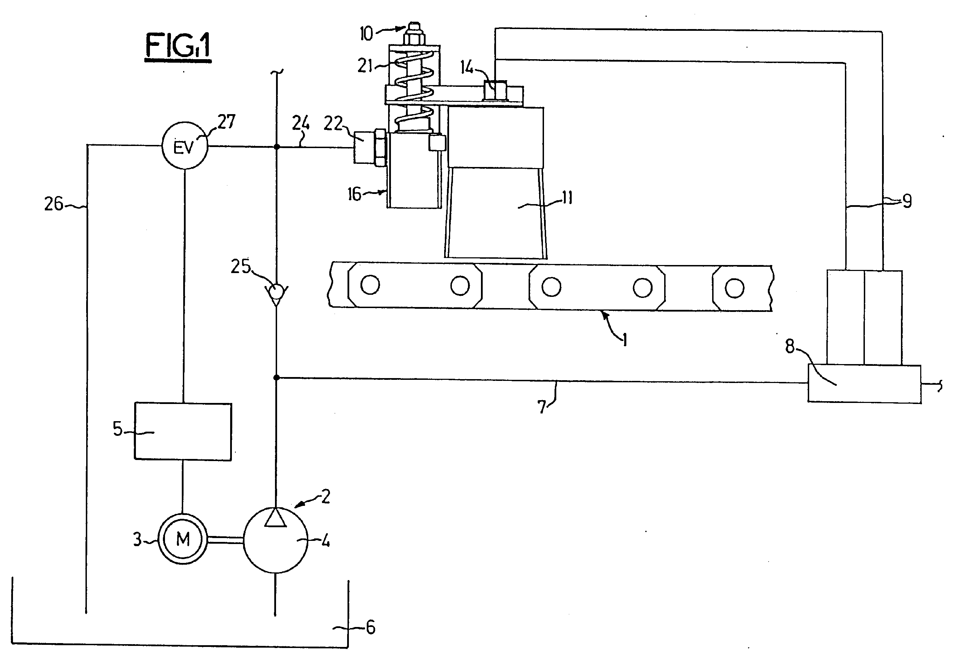

L'installation de lubrification illustrée schématiquement par la figure 1 comprend, pour la lubrification cyclique d'une chaîne 1, par exemple d'une chaîne de convoyeur, un groupe motopompe 2 comprenant un moteur électrique 3 entraînenant une pompe 4 et commandé de façon cyclique par une commande 5. La commande 5 peut par exemple être actionnée par un organe de la chaîne à lubrifier, ou en fonction du cycle de fonctionnement de la chaîne, ou encore en fonction du temps, par exemple par un temporisateur ou une minuterie.

A la sortie de la pompe 4 qui aspire du lubrifiant d'un réservoir 6 est reliée une ligne d'alimentation 7 allant à un distributeur 8 à dosage volumétrique. Dans l'exemple représenté, le distributeur 8 est un distributeur double à deux sorties auxquelles sont reliées deux lignes de distribution 9 allant à un élément lubrificateur référencé 10 dans son ensemble.

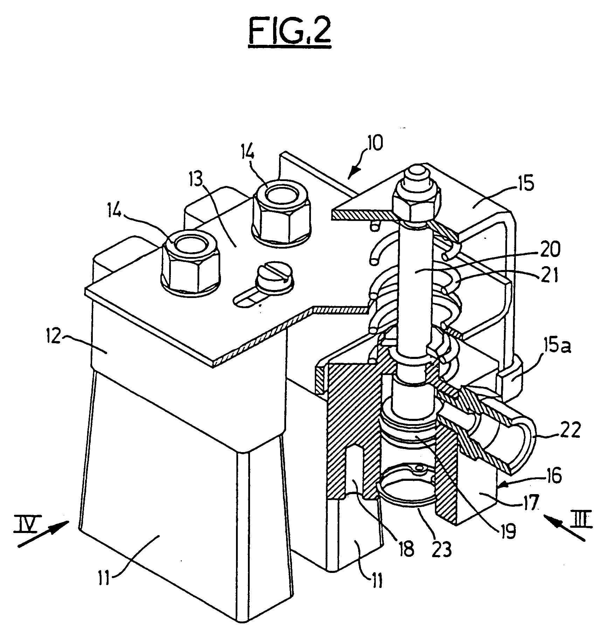

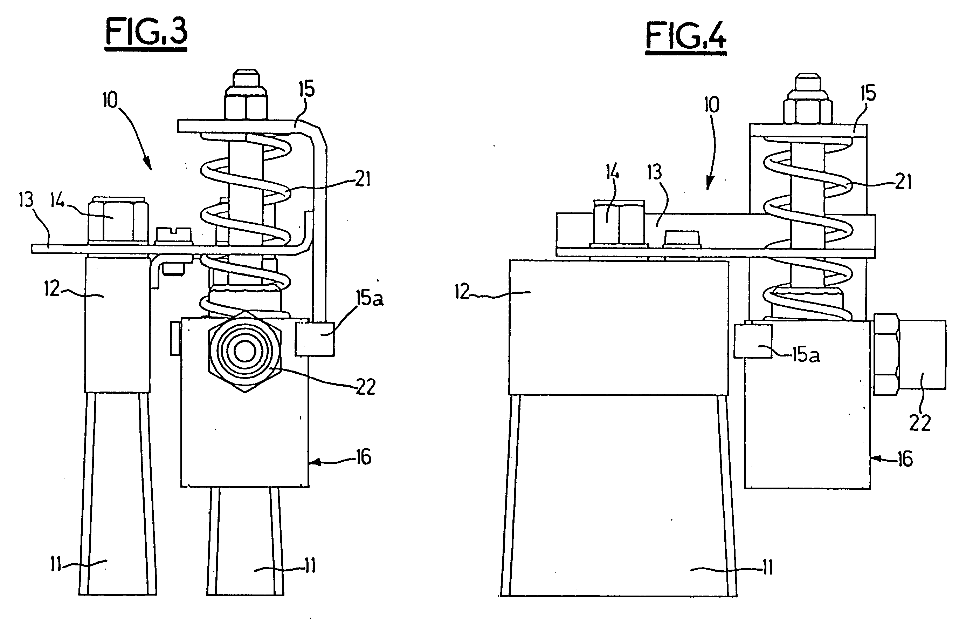

L'élément lubrificateur 10 représenté plus en détail sur les figures 2, 3 et 4 comprend deux pinceaux applicateurs 11 fixés par leurs montures 12 côte à côte sur une platine 13 commune. Chaque pinceau 11 comporte un raccord 14 pour le branchement de l'une des lignes de distribution 9 venant du distributeur 8. La platine 13 est à son tour fixée sur un support 15 monté coulissant sur un organe actionneur 16 par un guide 15a entourant l'organe actionneur 16 adapté au contour carré de l'organe 16 de manière à éviter tout mouvement augulaire au support 15, de la platine 13 et donc des pinceaux 11 par rapport à l'organe actionneur 16 et par rapport à la chaîne 1.

Tel que cela apparaît sur la figure 2, l'organe actionneur 16 comprend un cylindre 17 muni de trous taraudés 18 en vue de sa fixation, et un piston 19 dont la tige 20 sort du cylindre 17 vers le haut. L'extrémité supérieure de la tige de piston 20 est fixée au support 15, un ressort de compression 21 entrouvrant la tige de piston 20 étant intercalé entre le cylindre 17 et le support 15 de manière à solliciter le support 15 en permanence vers le haut par rapport au cylindre 17. Le cylindre 17 est un cylindre à simple effet, ouvert vers le bas, un raccord 22 étant prévu pour l'envoi de fluide sous pression sur la face supérieure du piston 19, de manière à déplacer ce dernier vers le bas à l'encontre de la force de rappel du ressort 21. Un circlip 23 limite la course du piston 19.

Comme représenté sur la figure 1, le raccord 22 de l'organe actionneur 16 est destiné au raccordement d'une ligne de commande 24 reliée à la sortie de la pompe 4 et renfermant un clapet de retenue 25 ouvrant de manière à permettre le passage du lubrifiant sous pression de la pompe 4 vers l'organe actionneur 16. A la ligne 24 est raccordée, entre le clapet de retenue 25 et l'organe actionneur 16, une ligne de décompression 26 reliée au réservoir 6 par l'intermédiaire d'une vanne 27. La vanne 27 est une électrovanne actionnée par la commande 5 du moteur 3, par l'intermédiaire d'une temporisation, de telle manière que la vanne 27 soit fermée à chaque cycle de fonctionnement de la pompe 4 et ne soit ouverte qu'avec un retard prédéterminé, de préférence réglable, après la fin de chaque cycle.

L'installation de lubrification telle que décrite ci-dessus et illustrée par le dessin fonctionne de la manière suivante.

Pendant le fonctionnement de la chaîne 1, la commande 5 déclenche, soit en fonction du temps, soit en fonction du cycle de fonctionnement de la chaîne, un cycle ou une séquence de plusieurs cycles successifs de lubrification. A cet effet, la commande 5 met en route le groupe motopompe 2 pendant une durée prédéterminée, de sorte que la pompe 4 envoie du lubrifiant sous pression du réservoir 6 par sa sortie dans les lignes 7 et 24. Par la ligne 7, le lubrifiant parvient dans le distributeur 8 qui envoie deux doses prédéterminées de lubrifiant sous pression, par les lignes 9, aux deux pinceaux applicateurs 11 de l'élément 10. En même temps, le lubrifiant sous pression parvient par la ligne 24 à l'organe actionneur 16, lequel amène les deux pinceaux 11 en contact avec la chaîne 1.

Par conséquent, la chaîne 1 en fonctionnement se trouve lubrifiée.

A la fin du cycle déterminé par la commande 5, le groupe motopompe 2 est arrêté et la ligne d'alimentation 7 se trouve décomprimée grâce à un clapet de décompression contenu dans la pompe 4. Par contre, en raison du clapet de retenue 25 et de la vanne 27 maintenue fermée par la commande 4, la ligne 24 reste sous pression. Par conséquent, les pinceaux 11 continuent d'être en contact avec la chaîne 1 et continuent de lubrifier cette dernière grâce au volume de lubrifiant fourni pendant le cycle et accumulé par les pinceaux 11.

Ce n'est qu'à l'issue d'un retard prédéterminé par la commande 5 que la vanne 27 est ouverte par la commande 5, permettant ainsi la décompression de la ligne 24 par la ligne 26, de sorte que le ressort 21 rappelle les pinceaux 11, c'est-à-dire les amène hors de contact d'avec la chaîne 1.

Les pinceaux 11 restent ainsi en contact avec la chaîne 1 pendant une durée prédéterminée après la fin du cycle d'alimentation en lubrifiant des pinceaux 11. Cela est valable aussi bien pour une installation équipée d'un distributeur 8 à action directe, par lequel une dose prédéterminée du lubrifiant est envoyée à chaque pinceau 11 au début de chaque cycle de fonctionnement du groupe motopompe 2, que pour une installation équipée d'un distributeur à action indirecte, lequel envoie à chaque pinceau 11 une dose prédéterminée de lubrifiant à la fin de chaque cycle de fonctionnement du groupe motopompe 2.

Bien entendu, l'installation dont on n'a représenté sur la figure 1 qu'un élément lubrificateur 10 pourrait être équipée de plusieurs éléments lubrificateurs répartis sur le trajet de la chaîne, comme esquissé sur la figure 1 par un prolongement des lignes 7 et 24.

Il y a également lieu de noter qu'au lieu de faire déboucher la ligne de décompression 26 dans le réservoir 6, il serait possible de ramener la ligne 26 sur la sortie de la pompe 4. En effet, du fait que la pompe 4 est équipée d'un clapet de décompression interne, la ligne 26 permettrait ainsi également la décompression de la ligne 24 à travers la pompe 4, lors de l'ouverture de la vanne 27.

Les pinceaux applicateurs 11 utilisés dans l'élément lubrificateur 10 pourraient bien entendu être remplacés par d'autres organes applicateurs rétractables ayant une certaine capacité d'absorption de lubrifiant et pouvant être amenés en contact (frottement) avec la chaîne.

Par ailleurs, au lieu d'utiliser des organes applicateurs mobiles en translation pour leur mise en contact avec et leur mise hors de contact d'avec la chaîne, l'élément lubrificateur pourrait également comporter des organes applicateurs à mobilité angulaire, c'est-à-dire pivotants, par exemple avec un organe actionneur exerçant une poussée parallèlement à la chaîne.

Selon le type de chaîne à lubrifier, il serait également possible d'utiliser, sur chaque élément lubrificateur 10, un seul organe applicateur 11 au lieu de deux organes applicateurs coopérant chacun avec un bord de la chaîne, comme dans l'exemple représenté.

## Revendications

1. Procédé de lubrification de chaînes (1) consistant, de façon cyclique, à envoyer, par mise en route cyclique d'une pompe (4), du lubrifiant sous pression par une ligne d'alimentation simple (7) à un distributeur à dosage (8) délivrant à chaque cycle une dose prédéterminée de lubrifiant sous pression à un élément lubrificateur (10) transmettant ce lubrifiant à la chaîne par contact de son organe applicateur avec cette dernière, et à décomprimer ensuite ladite ligne d'alimentation, ***caractérisé*** par le fait qu'on utilise un élément lubrificateur (10) comprenant un organe applicateur (11) mobile à l'encontre d'une force de rappel (21) d'une position de repos en retrait par rapport à la chaîne à une position de travail en contact avec la chaîne, qu'on commande le mouvement dudit organe applicateur (11) de la position de repos à la position de travail par envoi de lubrifiant sous pression par ladite pompe (4) à fonctionnement cyclique, par une ligne de commande (24) et par l'intermédiaire d'un clapet de retenue (25), et qu'on décomprime ladite ligne de commande entre ledit organe applicateur et ledit clapet de façon temporisée par rapport à la décompression de la ligne d'alimentation, pour retarder le passage dudit organe applicateur à la position de repos sous l'action de ladite force de rappel.

2. Installation de lubrification de chaînes, comprenant un groupe motopompe (2), des moyens (5) pour mettre en route ledit groupe de façon cyclique, au moins un distributeur à dosage (8) relié à la sortie de la pompe (4) dudit groupe (2) et délivrant, à chaque cycle de mise en route dudit groupe, un volume prédéterminé de lubrifiant sous pression, et au moins un élément lubrificateur (10) comprenant un organe applicateur (11) alimenté en lubrifiant par ledit distributeur et transmettant ce lubrifiant à la chaîne par contact avec cette dernière, ***caractérisée*** par le fait que l'élément lubrificateur (10) comprend un organe applicateur (11) mobile entre une première position en retrait par rapport à la chaîne et une seconde position en contact avec la chaîne, des moyens élastiques (21) pour solliciter l'organe applicateur vers ladite première position, et des moyens de commande (16) par fluide sous pression pour amener ledit organe applicateur, à l'encontre de l'action desdits moyens élastiques, de ladite première position à ladite seconde position, que la sortie de la pompe (4) du groupe motopompe (2) est reliée par une ligne de commande (24) contenant un clapet de retenue (25) auxdits moyens de commande (16) et que ladite ligne de commande (24) est reliée, entre ledit clapet (25) et lesdits moyens de commande (16), au réservoir (6) de la pompe (4) par une ligne de décompression (26) contenant une vanne (27) qui, lorsqu'elle est ouverte, relie ladite ligne de commande au réservoir (6) de la pompe, des moyens de temporisation étant prévus pour commander l'ouverture de ladite vanne avec un retard prédéterminé par rapport à la fin du cycle de fonctionnement dudit groupe.

3. Installation suivant la revendication 2, ***caractérisée*** par le fait que chaque élément lubrificateur (10) comprend un ou plusieurs organes applicateurs (11) sous la forme de pinceaux.

4. Installation suivant la revendication 1 ou 2, ***caractérisée*** par le fait que l'organe applicateur (11) est mobile en translation.

5. Installation suivant la revendication 1 ou 2, ***caractérisée*** par le fait que l'organe applicateur est mobile angulairement.

## Patentansprüche

1. Verfahren zum Schmieren von Ketten (1), das darin besteht, daß zyklisch durch zyklisches Ingangsetzen einer Pumpe (4) Schmiermittel unter Druck durch eine einfache Speiseleitung (7) zu einem Dosierverteiler (8) befördert wird, der bei jedem Zyklus eine vorbestimmte Dosis von Schmiermittel unter Druck einem Schmiermittelelement (10) liefert, das dieses Schmiermittel auf die Kette durch Kontakt seines Auftragorgans mit dieser überträgt, und anschließend diese Speiseleitung dekomprimiert wird, dadurch gekennzeichnet, daß ein Schmierelement (10) verwendet wird, das ein Auftragorgan (11) umfaßt, das entgegen einer Rückholkraft (21) aus einer bezüglich der Kette zurückversetzten Ruhestellung in eine Arbeitsstellung in Kontakt mit der Kette beweglich ist, daß die Bewegung dieses Auftragorgans (11) aus der Ruhestellung in die Arbeitsstellung durch Beförderung von Schmiermittel unter Druck durch diese Pumpe (4) mit zyklischem Betrieb über eine Steuerleitung (24) und über ein Rückhalteventil (25) gesteuert wird und daß diese Steuerleitung zwischen dem Auftragorgan und dem Ventil verzögert bezüglich der Dekompression der Speiseleitung dekomprimiert wird, um den Übergang des Auftragorgans in die Ruhestellung unter der Wirkung der Rückholkraft zu verzögern.

2. Anlage zum Schmieren von Ketten, umfassend eine Motorpumpengruppe (2), Mittel zum zyklischen Ingangsetzen dieser Gruppe wenigstens einen Dosierverteiler (8), der mit dem Ausgang der Pumpe (4) dieser Gruppe (2) verbunden ist und bei jedem Zyklus des Ingangsetzens dieser Gruppe ein vorbestimmtes Volumen von Schmiermittel unter Druck liefert, und wenigstens ein Schmierelement (10), das ein Auftragorgan (11) umfaßt, das durch den Verteiler mit Schmiermittel gespeist ist und dieses Schmiermittel auf die Kette durch Kontakt mit dieser überträgt, dadurch gekennzeichnet, daß das Schmierelement (10) ein Auftragorgan (11), das zwischen einer ersten bezüglich der Kette zurückversetzten Stellung und einer zweiten Stellung in Kontakt mit der Kette beweglich ist, elastische Mittel (21), um das Auftragorgan auf die erste Stellung zu zu beaufschlagen, und Mittel (16) zur Steuerung durch Druckfluid umfaßt, um dieses Auftragorgan entgegen der Wirkung der elastischen Mittel aus der ersten Stellung in die zweite Stellung zu bringen, daß der Ausgang der Pumpe (4) der Motorpumpengruppe (2) durch eine ein Rückhalteventil (25) enthaltende Steuerleitung (24) mit den Steuermitteln (16) verbunden ist und daß die Steuerleitung (24) zwischen dem Ventil (25) und den Steuermitteln (16) mit dem Behälter (6) der Pumpe (4) durch eine Dekompressionsleitung (26) verbunden ist, die ein Ventil (27) enthält, das, wenn es offen ist, die Steuerleitung mit dem Behälter (6) der Pumpe verbindet, wobei Verzögerungsmittel vorgesehen sind, um die Öffnung des Ventils mit einer vorbestimmten Verzögerung bezüglich des Endes des Betriebszyklus der Gruppe zu steuern.

3. Anlage nach Anspruch 2, dadurch gekennzeichnet, daß jedes Schmierelement (10) ein oder mehrere Auftragorgane (11) in Form von Pinseln umfaßt.

4. Anlage nach Anspruch 1 oder 2, dadurch gekennzeichnet, daß das Auftragorgan (11) translationsbeweglich ist.

5. Anlage nach Anspruch 1 oder 2, dadurch gekennzeichnet, daß das Auftragorgan (11) winkelbeweglich ist.

## Claims

1. A method of lubricating chains (1), comprising, in a cyclical manner, feeding, by operating a pump (4) cyclically, lubricant under pressure through a single supply line (7) to a metering distributor (8) supplying in each cycle a predetermined amount of lubricant under pressure to a lubricating element (10) transmitting this lubricant to the chain by contact of its applicator member with the latter, and then decompressing said supply line, characterised in that a lubricating element (10) is used comprising an applicator member (11) which is movable against a return force (21) from a rest position, retracted in relation to the chain, into an operating position in contact with the chain, in that the movement of said applicator member (11) from the rest position into the operating position is controlled by said cyclically operating pump (4) feeding lubricant under pressure through a control line (24) and via a check valve (25), and in that said control line is decompressed between said applicator member and said valve in a delayed manner in relation to the decompression of the supply line, so as to retard the passage of said applicator member into the rest position under the action of said return force.

2. A chain-lubricating apparatus, comprising a power-driven pump unit (2), means (5) for operating said unit in cyclic fashion, at least one metering distributor (8) connected to the outlet of the pump (4) of said unit (2) and supplying, in each operating cycle of said unit, a predetermined volume of lubricant under pressure, and at least one lubricating element (10) comprising an applicator member (11) supplied with lubricant by said distributor and transmitting said lubricant to the chain by contact with the latter, characterised in that the lubricating element (10) comprises an applicator member (11) which is movable between a first position, retracted in relation to the chain, and a second position in contact with the chain, elastic means (21) for urging the applicator member towards said first position, and control means (16) by fluid under pressure for bringing said applicator member, against the action of said elastic means, from said first position into said second position, in that the outlet of the pump (4) of the power-driven unit (2) is connected by a control line (24) containing a check valve (25) to said control means (16), and that said control line (24) is connected, between said valve (25) and said control means (16), to the reservoir (6) of the pump (4) through a decompression line (26) containing a valve (27) which, when it is open, connects said control line to the pump reservoir (6), delay means being provided to control the opening of said valve with a predetermined delay in relation to the end of the operating cycle of said unit.

3. An apparatus according to claim 2, characterised in that said lubricating element (10) comprises one or more applicator members (11) in the form of brushes.

4. An apparatus according to claim 1 or 2, characterised in that the applicator member is movable in translation.

5. An apparatus according to claim 1 or 2, characterised in that the applicator member is angularly movable.
